# EUROPÄISCHE PATENTSCHRIFT

(11) **EP 0 568 894 B1**
(45) Veröffentlichungstag und Bekanntmachung des Hinweises auf die Patenterteilung: **02.09.1998**
(21) Anmeldenummer: 93106736.7
(22) Anmeldetag: 26.04.1993
(51) Int. Cl.: G03C 7/327

(54) **Polymerer Purpurkuppler und farbfotographisches Aufzeichnungsmaterial, das diesen polymeren Purpurkuppler enthält**
Polymeric magenta couplers and colour photographic recording material containing them
Copulants magenta polymériques et matériau d'enregistrement photographique couleur les contenant

(30) Priorität: 08.05.1992 DE 4215206
(43) Veröffentlichungstag der Anmeldung: 10.11.1993
(73) Patentinhaber: Agfa-Gevaert AG, 51373 Leverkusen (DE)
(72) Erfinder: Helling, Günter, Dr., W-5068 Odenthal-Glöbusch (DE); Bialek, Rainer, W-5090 Leverkusen 1 (DE); Weimann, Ralf, Dr., W-5090 Leverkusen 1 (DE)

(56) Entgegenhaltungen:
- EP-A- 0 294 681

## Beschreibung

Die Erfindung betrifft einen polymeren Purpurkuppler und ein farbfotografisches Aufzeichnungsmaterial, das diesen polymeren Purpurkuppler enthält. Der polymere Purpurkuppler ist durch Polymerisation ethylenisch ungesättigter Monomerer erhalten worden und weist Pyrazoloazolgruppen auf, die direkt mit der ethylenisch ungesättigten Gruppe bzw. dem daraus gebildeten Polymergerüst verbunden sind.

Es ist bekannt, farbige fotografische Bilder durch chromogene Entwicklung herzustellen, d. h. dadurch, daß man bildmäßig belichtete Silberhalogenidemulsionsschichten in Gegenwart geeigneter Farbkuppler mittels geeigneter farbbildender Entwicklersubstanzen - sogenannter Farbentwickler - entwickelt, wobei das in Übereinstimmung mit dem Silberbild entstehende Oxidationsprodukt der Entwicklersubstanzen mit dem Farbkuppler unter Bildung eines Farbstoffbildes reagiert. Als Farbentwickler werden gewöhnlich aromatische, primäre Aminogruppen enthaltende Verbindungen, insbesondere solche vom p-Phenylendiamintyp, verwendet.

Es ist bekannt, die Farbkuppler in Form von Polymerisatdispersionen zu verwenden, in denen der funktionelle Rest eines Farbkupplers ein- oder mehrfach mit einem Polymergerüst verknüpft und auf diese Weise diffusionsfest gemacht ist. Ein solches Polymer weist somit wiederkehrende Struktureinheiten mit dem Farbkuppler auf.

Farbkuppler, die in Form solcher Polymerisatdispersionen in die Schichten von fotografischen Aufzeichnungsmaterialien eingearbeitet sind, sind im allgemeinen ausreichend diffusionsfest und beinträchtigen die mechanischen Eigenschaften der Schichten auch bei geringen Bindemittelgehalten nur wenig. Es ist besonders wichtig, daß sie bei der Lagerung nicht auskristallisieren, eine gute Stabilität gegen Licht, Wärme und Feuchtigkeit aufweisen und daß auch die daraus erzeugten Farbstoffe stabil sind, die erwünschten spektralen Eigenschaften aufweisen und bei der Entwicklung diffusionsfest und als möglichst feines Korn abgeschieden werden. Farbkuppler, die in Form solcher Polymerisatdispersionen mit einem Molekulargewicht größer als 5000 in fotografische Aufzeichnungsmaterialien eingearbeitet sind, weisen allgemein gute Kolloidstabilität auf und erfüllen einige der genannten an sie gerichteten Forderungen recht gut. Solche hochmolekularen Farbkuppler sind beispielsweise beschrieben in
DE-C-1 297 417, DE-A-24 07 569, DE-A-3148125, DE-A-32 17 200, DE-A-33 20 079, DE-A-33 24 932, DE-A-33 31 743, DE-A-33 40 376, DE-A-34 61 455, EP-A-27 284, US-A-4 080 211, US-A-4 559 297, US-A-4 681 835, US-A-4 764, EP-A-0 325 275, DE-A-0 325 276, DE-A- 36 08 744.

Die hochmolekularen Farbkuppler werden in der Regel durch Polymerisation von ethylenisch ungesättigten sogenannten monomeren Farbkupplern hergestellt.

Die bekannten polymeren Magentakuppler weisen aber folgende Nachteile auf:

Die aus polymeren Pyrazolon-Kupplern erhaltenen Purpurfarbstoffe weisen eine nicht ideale Absorption auf: Besonders störend ist die Gelbnebendichte, die eine zusätzliche Verwendung von Maskenkupplern erforderlich macht.

Polymere Pyrazoloazol-Kuppler wie z.B. die VerbindungenM-23 bis M-27 aus DE-A-35 16 996 oder Verbindung XV aus EP-A-0 133 262 liefern eine völlig unzureichende Farbausbeute und sind aus diesem Grund nicht brauchbar.

Die polymeren Pyrazoloazol-Kuppler aus EP 294 681 sind in ihren Absorptionseigenschaften noch nicht ausreichend, weil die Halbbandbreite noch zu groß ist.

Der vorliegenden Erfindung liegt die Aufgabe zugrunde, für farbfotografische Aufzeichnungsmaterialien verbesserte polymere Purpurkuppler zur Verfügung zu stellen.

Es wurden nun neue polymere Purpurkuppler gefunden. Bei den neuen Kupplern handelt es sich um Homo- oder Copolymere, die wiederkehrende Einheiten eines kupplerhaltigen polymerisierten Monomeren K und gegebenenfalls davon verschiedene wiederkehrende Einheiten mindestens eines weiteren polymerisierten Monomers (Comonomer) enthalten.

Gegenstand der vorliegenden Erfindung ist ein polymerer Farbkuppler, erhalten durch Polymerisation von ethylenisch ungesättigten kupplerhaltigen Monomeren, gekennzeichnet durch wiederkehrende Einheiten eines polymerisierten Monomers K der Formel I 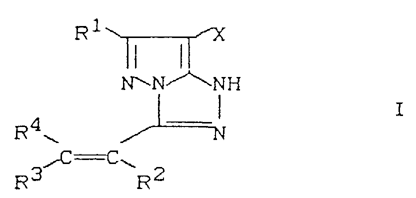 worin bedeuten
- R¹: H oder ein gegebenenfalls substituiertes Alkylrest;
- R², R³, R⁴: (gleich oder verschieden) H, Cl, -COOH oder gebenenfalls substituierte Alkylreste;
- X: H oder eine durch Kupplung freisetzbare Gruppe.

Bei den durch R¹ dargestellten Alkylrest handelt es sich vorzugsweise um Alkyl mit 1-6 C-Atomen, z.B. Methyl, Ethyl, Propyl, Isopropyl, Butyl, s-Butyl, t-Butyl, Isobutyl, t-Amyl, Hexyl; die Alkylreste können substituiert sein, z.B. durch Cl, -OH, -COOH, Acylamido, Sulfonamido.

Bei den durch R², R³ oder R⁴ dargestellten Alkylresten handelt es sich vorzugsweise um Alkyl mit 1-3 C-Atomen, insbesondere Methyl; die Alkylreste können substituiert sein, z.B. durch Cl oder -COOH.

Bei der durch X dargestellten freisetzbaren Gruppe handelt es sich beispielsweise um ein Halogenatom z. B. Cl oder um eine organische Gruppe, die in der Regel über ein Sauerstoff-, Schwefel- oder Stickstoffatom an die Kupplungsstelle des Kupplermoleküls angeknüpft ist. Falls es sich bei der abspaltbaren Gruppe um eine cyclische Gruppe handelt, kann die Anknüpfung an die Kupplungsstelle des Kupplermoleküls entweder direkt über ein Atom, das Bestandteil eines Ringes ist, z. B. ein Stickstoffatom, oder indirekt über ein zwischengeschaltetes Bindeglied erfolgt sein, Derartige abspaltbare Gruppen sind in großer Zahl bekannt, z. B, als Fluchtgruppen von 2-Äquivalentpurpurkupplern,

Beispiele von über Sauerstoff angeknüpften abspaltbaren Gruppen entsprechen der Formel

- O - R⁵,

worin R⁵ für einen acyclischen oder cyclischen organischen Rest steht, z.B. für Alkyl, Aryl, eine heterocyclische Gruppe oder Acyl, das sich beispielsweise ableitet von einer organischen Carbon- oder Sulfonsäure, Bei besonders bevorzugten abspaltbaren Gruppen dieser Art bedeutet R⁵ eine gegebenenfalls substituierte Phenylgruppe.

Beispiele von über Stickstoff angeknüpften abspaltbaren Gruppen sind beispielsweise in den folgenden deutschen Offenlegungsschriften (DE-A-) beschschrieben:
25 36 191, 27 03 589, 28 13 522, 33 39 201.

Hierbei handelt es sich vielfach um 5-gliedrige heterocyclische Ringe, die über ein Ringstickstoffatom mit der Kupplungsstelle des Magentakupplers verbunden sind. Die heterocyclischen Ringe enthalten vielfach benachbart zu dem die Bindung an das Kupplermolekül vermittelnden Stickstoffatom aktivierende Gruppen, z. B. Carbonyl- oder Sulfonylgruppen oder Doppelbindungen.

Wenn die abspaltbare Gruppe über ein Schwefelatom an die Kupplungsstelle des Kupplers gebunden ist, kann es sich bei ihr um den Rest einer diffusionsfähigen Mercaptoverbindung handeln, die die Entwicklung von Silberhalogenid zu inhibieren vermag, Derartige Inhibitorreste sind vielfach als an die Kupplungsstelle von Kupplern, auch Magentakupplern gebundene abspaltbare Gruppe beschrieben worden, z. B. in US-A-3 227 554.

Beispiele für geeignete kupplerhaltige Monomere K sind im folgendem angegeben:

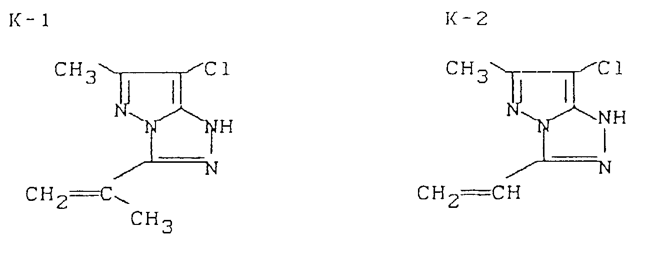

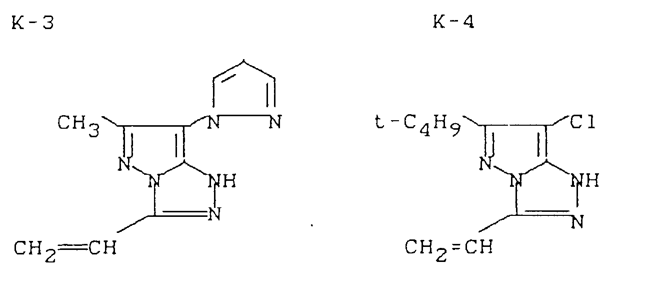

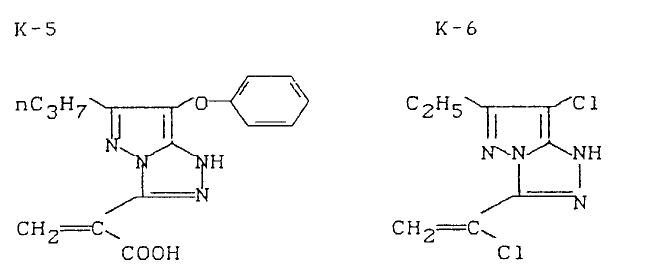

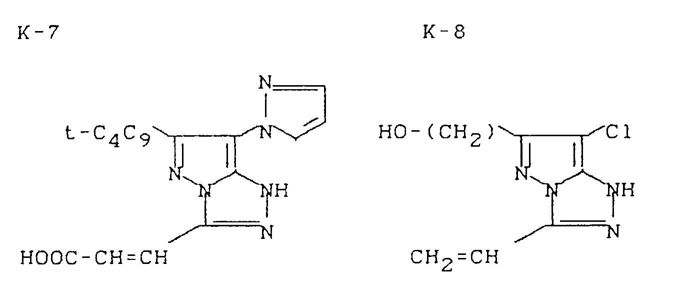

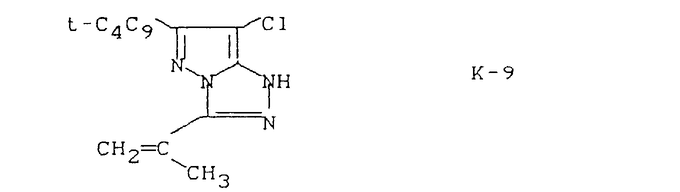

Die Synthese der kupplerhaltigen Monomeren wird am Beispiel von K-2 erläutert:

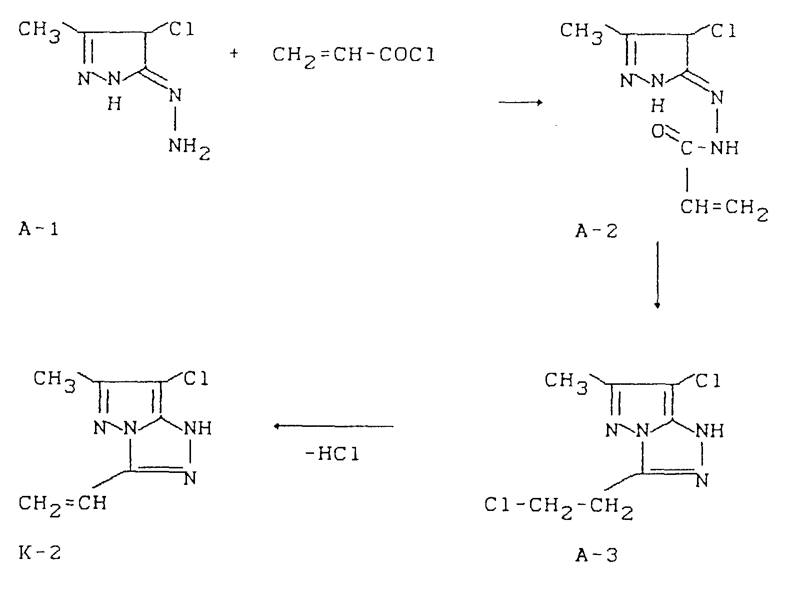

### Synthese der Verbindung K-2

### Acylierung des Hydrazinopyrazols A-1

In 2 l 0°C kaltes Wasser werden 372,6 g 74,7 %iges sauer eingestelltes Hydrazinopyrazol eingeführt. Dann wird innerhalb 10 min mit 463,8 g 20 %iger Natronlauge neutralisiert. Es werden dann 140 g Natriumhydrogencarbonat und 350 ml Acetonitril zugegeben und anschließend in 15 min bei 0°C 107,9 g Acrylsäurechlorid in 350 ml Acetonitril zudosiert. Nach 15 minütigem Nachrühren bei 0°C wird abgesaugt, 2 mal mit je 0,8 Liter Wasser verrührt und abgesaugt. Man erhält 222 g an Produkt A-2.

### Cyclisierung zu A-3

Zu einer Lösung von 182 g A-2 in 1,83 Liter Diethylenglykoldimethylether werden in 15 min 252 ml Phosphorylchlorid zudosiert. Anschließend erwärmt man auf 80°C und rührt 5 h bei dieser Temperatur nach. Nach Abkühlen auf 50°C wird die Reaktionsmischung in 40 min auf 7,3 Liter 65°C warmes Wasser getropft. Es wird 15 min nachgerührt, anschließend auf 0°C gekühlt und abgesaugt. Das Rohprodukt wird 2 mal mit je 2 Liter Wasser gerührt und anschließend im Vakuum bei 40°C getrocknet. Man erhält 116 g an Produkt A-3.

### Kupplermonomer K-2

In 529 ml Dimethylsulfoxid werden 293,3 g Kalium-tert.-butylat gelost. Unter vorsichtiger Kühlung werden 115 g A-3 in 173 ml Dimethylsulfoxid gelöst bei 20-25°C zudosiert. Nach 15 minütigem Nachrühren wird die Reaktionsmischung auf einer Mischung aus 4,14 kg Eis mit 230 g conc. Salzsäure ausgefällt, abgesaugt, nachgewaschen und im Vakuum bei 40°C getrocknet. Man erhält 94 g an Produkt K-2. Fp.: 192°C.

Der Anteil des kupplerhaltigen Monomers K im Copolymer beträgt im allgemeinen 10 -100 Gew.-%, vorzugsweise 20 - 80 Gew.-%.

Die erfindungsgemäßen Copolymere können neben den wiederkehrenden Einheiten aus kupplerhaltigem Monomer K zusätzlich wiederkehrende Einheiten mindestens eines weiteren copolymerisierten Monomers C (Comonomer) enthalten. Beispiele für derartige Monomere C umfassen Ester und Amide von Acrylsäure und deren Derivaten, z.B. von Acrylsäure, α-Chloracrylsäure, Methacrylsäure (beispielsweise Acrylamid, Methylmethacrylat, Ethylacrylat, Ethylmethacrylat, n-Propylacrylat, n-Butylacrylat, 2-Ethylhexylacrylat, n-Hexylacrylat, Octylmethacrylat, Laurylmethacrylat und Methylenbisacrylamid), Vinylester (beispielsweise Vinylacetat, Vinylpropionat und Vinyllaurat), Acrylnitril, Methacrylnitril, aromatische Vinylverbindungen (beispielsweise Styrol, Vinyltoluol, Divinylbenzol, Vinylacetophenon, Styrolsulfonsäure), Itaconsäure, Zitraconsäure, Crotonsäure, Vinylidenchlorid, Vinylalkylether (beispielsweise Vinylethylether), Ester von Maleinsäure, N-Vinyl-2-pyrrolidon, N-Vinyl-, 2-Vinyl-und 4-Vinylpyridin. Als Comonomer kommen beispielsweise auch Monomere mit einer sauren Gruppe in Frage, wie beispielsweise Acrylsäure, Methacrylsäure, Itaconsäure, Maleinsäure, Fumarsäure, Styrolsulfonsäure, Acrylamido-2-methylpropansulfonsäure, Sulfoethylmethacrylat, Vinylsulfonsäure. Der Anteil derweiteren Monomere C im polymeren Farbkuppler kann insgesamt 0 -90 Gew.-%, vorzugsweise 20 -80 Gew.-% betragen.

Es ist besonders bevorzugt, als Monomer C einen Ester der Acrylsäure oder Methacrylsäure und/oder eine polymerisierbare Säure zu verwenden. Zwei oder mehrere der vorstehend beschriebenen Monomere C können miteinander verwendet werden. Beispielsweise ist es möglich, eine Kombination von n-Butylacrylat und Divinylbenzol, Styrol und Methylmethacrylat, Methylacrylat und Butylmethacrylat zu verwenden. Das ethylenisch ungesättigte Monomer C kann ausgewählt werden derart, daß es sich günstig auf die physikalischen Eigenschaften und/oder chemischen Eigenschaften des herzustellenden Copolymers, beispielsweise die Löslichkeit, Verträglichkeit mit einem Bindemittel wie Gelatine oder anderen fotografischen Zusätzen wie farbgebenden Verbindungen, Ultraviolettstrahlen absorbierenden Mitteln, Antioxidantien und dergleichen, sowie auf die Flexibilität der Schichtzusammensetzungen bzw. der farbfotografischen Aufzeichnungsmaterialien auswirkt. Obwohl die Monomere C im allgemeinen keine Gruppen enthalten, die eine fotografische Wirksamkeit entfalten, ist es möglich als Monomer C auch solche Verbindungen zu verwenden, die außer der ethylenisch ungesättigten polymerisierbaren Gruppe eine fotografisch wirksame Gruppe, z. B. eine kupplungsfähige Gruppe, enthalten, die jedoch von der in Formel I dargestellten Kupplergruppe verschieden ist. Solche kupplungsfähigen Gruppen können beispielsweise Weißkuppler-oder Maskenkupplereigenschaften haben oder bei Kupplung einen fotografisch wirksamen Rest, z. B. einen Inhibitor oder Entwicklungsbeschleuniger freisetzen.

Die Molekulargewichte der erfindungsgemäßen Polymere sind größer als 1000, vorzugsweise größer als 5000, insbesondere größer als 20.000. Die obere Grenze ist unkritisch und kann, insbesondere wenn als zusätzliches Monomer C bi- oder polyfunktionelle Monomere verwendet werden, Werte von über 10 Millionen erreichen.

Die erfindungsgemäßen polymeren Purpurkuppler werden den farbfotografischen Aufzeichnungsmaterialien in der Regel in Form von Polymerisatdispersionen, z. B, als Polymerlatex zugesetzt.

Die Polymerisation des Monomergemisches (Monomer K, Monomer S und gegebenenfalls Monomer C) kann nach einem der üblichen Polymerisationsverfahren durchgeführt werden, z. B. durch Emulsionspolymerisation oder durch Polymerisation in einem organischen Lösungsmittel.

Die Polymerisation der ethylenisch ungesättigten Monomeren wird im allgemeinen initiiert durch freie Radikale, die gebildet werden durch thermische Zersetzung eines chemischen Initiators, durch Einwirkung eines Reduktionsmittels auf eine oxidierende Verbindung (Redox-Initiator) oder durch physikalische Einwirkung, wie Bestrahlung mit Ultraviolettstrahlen oder anderen hochenergetischen Strahlungen, hohen Frequenzen, usw.

Beispiele für chemische Initiatoren umfassen ein Persulfat (beispielsweise Ammoniumpersulfat oder Kaliumpersulfat usw.), ein Peroxid (beispielsweise Wasserstoffperoxid, Benzoylperoxid oder tert. Butylperoctoat und eine Azonitrilverbindung (beispielsweise 4,4'-Azo-bis-4-cyanovaleriansäure oder Azobisisobutyronitril).

Beispiele für konventionelle Redox-Initiatoren umfassen Wasserstoffperoxid-Eisen-(II)-salz, Kaliumpersulfat, Natriummetabisulfit und Cer-IV-salz-Alkohol.

Beispiele für die Initiatoren und deren Funktionen werden beschrieben von F.A. Bovey, in Eumulsion Polymerisation, Interscience Publishers Inc., New York, 1955, Seiten 59 bis 93.

Als Emulgator, der bei der Emulsionspolymerisation verwendet werden kann, wird eine Verbindung mit oberflächenaktiver Wirkung verwendet. Bevorzugte Beispiele dafür umfassen Seifen, Sulfonate, Sulfate, kationische Verbindungen, amphotere Verbindungen und hochmolekulare Schutzkolloide. Spezielle Beispiele für die Emulgatoren und deren Funktionen werden beschrieben in Belgische Chemische Industrie, Bd. 28, Seiten 16 bis 20, 1963.

Ein bei der Herstellung des Polymers oder beim Dispergieren des Polymers in einer wäßrigen Gelatinelösung gegebenenfalls verwendetes organisches Lösungsmittel kann vor dem Vergießen aus der Gießlösung entfernt werden.

Als Lösungsmittel kommen beispielsweise solche in Frage, die ein gewisses Ausmaß an Wasserlöslichkeit aufweisen, so daß sie leicht durch Waschen mit Wasser in einem Gelatinenudelzustand entfernt werden können, und solche, die durch Sprühtrocknen, Vakuum- oder Dampfspülen entfernt werden können.

Beispiele solcher Lösungsmittel umfassen Ester (beispielsweise Ethylacetat), Ether, Ketone, halogenierte Kohlenwasserstoffe (beispielsweise Methylenchlorid, Trichlorethylen), Alkohole (beispielsweise Methanol, Ethanol, Butanol) und Kombinationen davon.

Um die Dispersionstabilität zu verbessern und die Flexibilität der aufgeschichteten Emulsion zu verbesseren, kann eine geringe Menge (vorzugsweise nicht mehr als 50 Gew.-% bezogen auf den erfindungsgemäßen polymeren Kuppler) eines permanenten Lösungsmittels, insbesondere eines mit Wasser nicht mischbaren hochsiedenden organischen Lösungsmittels, beispielsweise Dibutylphthalat und/oder Trikresylphosphat, zugesetzt werden. Die Konzentration des permanenten Lösungsmittels soll ausreichend sein, um das Polymer zu plastifizieren, während es in einem Zustand eines festen Teilchens gehalten wird. Andererseits soll die Konzentration des permanenten Lösungsmittels im Interesse einer geringen Schichtdicke und Schichtbelastung so gering wie möglich sein.

Nachstehend werden einige repräsentative Synthesebeispiele für die erfindungsgemäßen polymeren Purpurkuppler beschrieben.

### Polymerkuppler P-1

### Copolymerkuppler aus Pyrazolotriazolmonomer K-2, Butylacrylat und Methacrylsäure

Unter Stickstoffdurchleitung werden 38,5 g Acrylsäurebutylester, 10,64 g Methacrylsäure und 21 g Kupplermonomer K-2 in 51,1 ml t-Butanol 30 min bei 60°C gerührt. Dann wird auf 88°C erwärmt und 2/3 einer Lösung von 1,58 g Azodiisobuttersäuredimethylester in 25,2 g t-Butanol zugegeben. Man rührt 1 h bei 88°C, gibt die restliche Starterlösung zu und rührt weitere 2 h. Anschließend wird mit der gleichen Startermenge, gelöst in 9,35 g t-Butanol, nachinitiiert und 3 h bei 88°C gerührt. Nach Abkühlen auf Raumtemperatur wird mit 360 ml Aceton verdünnt und 3,6 Liter Eis/Wasser Mischung gefällt. Nach Absaugen und Trocknen erhält man 51 g an Polymer P-1.

### Polymerkuppler P-2

### Copolymer aus Pyrazolotriazolmonomer K-4, Methacrylsäure und Butylacrylat

Unter Stickstoffdurchleitung werden 4 g Acrylsäurebutylester, 2 g Methacrylsäure und 4 g Kupplermonomer K-4 in 7,3 ml t-Butanol 30 min bei 60°C gerührt. Dann wird auf 88°C erwärmt und 2/3 einer Lösung von 0,225 g Azodiisobuttersäuredimethylester in 3,5 g t-Butanol zugegeben. Man rührt 1 h bei 88°C, gibt die restliche Starterlösung zu und rührt weitere 2 h. Anschließend wird mit der gleichen Startermenge gelöst in 3,5 g t-Butanol nachinitiiert und 3 h bei 88°C gerührt, nochmals die gleiche Menge zugegeben und weitere 7 h gerührt. Nach Abkühlung auf Raumtemperatur wird mit 50 ml Aceton verdünnt und auf 500 g Eis/Wasser Mischung gefällt. Nach Absaugen und Trocknen erhält man 6,3 g an Polymer P-2.

### Polymerkuppler P-3 bis P-10

Unter Verwendung der vorstehend beschriebenen kupplerhaltigen Monomer K werden die in der folgenden Tabelle 1 beschriebenen Polymerkuppler auf die gleiche Weise wie für die Copolymeren in den vorstehenden Beispielen beschrieben hergestellt.

Für die Comonomere C werden folgende Abkürzungen verwendet:

| | |
|---|---|
| BA | Butylacrylat |
| EA | Ethylacrylat |
| MA | Methylacrylat |
| BM | Butylmethacrylat |
| AS | Acrylsäure |
| MAS | Methacrylsäure |

In der Tabelle 1 sind weiterhin die Vergleichskuppler A und B angegeben, in denen das Pyrazolctriazolgerüst über ein Bindeglied mit der Polymerkette verknüpft ist.

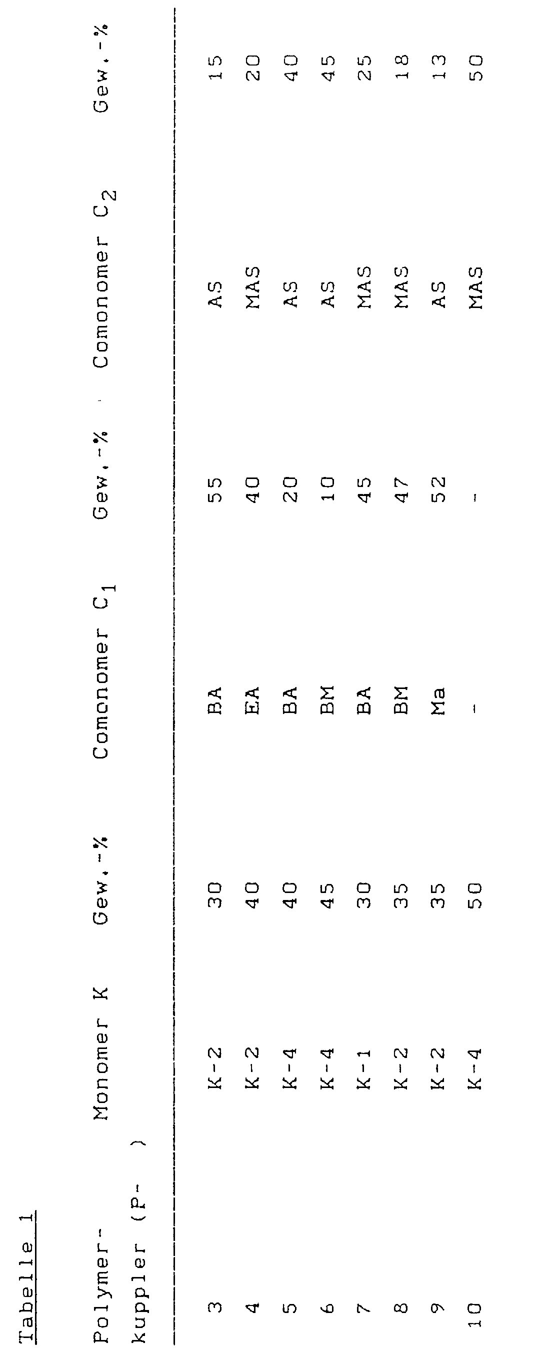

Das erfindungsgemäße farbfotografische Aufzeichnungsmaterial enthält mindestens eine lichtempfindliche Silberhalogenidemulsionsschicht und vorzugsweise eine Abfolge mehrerer solcher lichtempfindlichen Silberhalogenidemulsionsschichten und gegebenenfalls dazwischen angeordneten nicht lichtempfindlichen Bindemittelschichten, wobei mindestens einer der vorhandenen lichtempfindlichen Silberhalogenidemulsionsschichten ein polymerer Purpurkuppler der vorliegenden Erfindung zugeordnet ist.

Die in den lichtempfindlichen Schichten verwendeten lichtempfindlichen Silberhalogenidemulsionen können als Halogenid Chlorid, Bromid und Iodid bzw. Mischungen davon enthalten. Beispielsweise kann der Halogenidanteil wenigstens einer Schicht zu 0 bis 12 mol-% aus Iodid, zu 0 bis 50 mol-% aus Chlorid und zu 50 bis 100 mol-% aus Bromid bestehen. In bestimmten Ausführungsformen handelt es sich um überwiegend kompakte Kristalle, die z.B. kubisch oder oktaedrisch sind oder Übergangsformen aufweisen. Sie lassen sich dadurch kennzeichnen, daß sie im wesentlichen eine Dicke von mehr als 0,2 µm aufweisen. Das durchschnittliche Verhältnis von Durchmesser zu Dicke ist bevorzugt kleiner als 8;1, wobei gilt, daß der Durchmesser eines Kornes definiert ist als der Durchmesser eines Kreises mit einem Kreis inhalt entsprechend der projizierten Fläche des Kornes. In anderen Ausführungsformen können alle oder einzelne Emulsionen aber auch im wesentlichen tafelförmige Silberhalogenidkristalle aufweisen, bei denen das Verhältnis von Durchmesser zu Dicke größer als 8:1 ist. Bei den Emulsionen kann es sich um heterodisperse, oder auch um monodisperse Emulsionen handeln, die bevorzugt eine mittlere Korngröße von 0,3 um bis 1,2 um aufweisen. Die Silberhalogenidkörner können auch einen geschichteten Kornaufbau aufweisen.

Die Emulsionen können in der üblichen Weise chemisch und oder spektral sensibilisiert sein; sie können auch durch geeignete Zusätze stabilisiert sein. Geeignete chemische Sensibilisatoren, spektrale Sensibilisierungsfarbstoffe und Stabilisatoren sind beispielsweise in Research Disclosure 17643 beschrieben; verwiesen wird insbesondere auf die Kapitel III, IV und VI.

Das erfindungsgemäße farbfotografische Aufzeichnungsmaterial enthält bevorzugt mindestens je eine Silberhalogenidemulsionsschicht für die Aufzeichnung von Licht jedes der d.rei Spektralbereiche Rot, Grün und Blau. Zu diesem Zweck sind die lichtempfindlichen Schichten in bekannter Weise durch geeignete Sensibilisierungsfarbstoffe spektral sensibilisiert. Blauempfindliche Silberhalogenidemulsionsschichten müssen nicht notwendigerweise einen Spektralsensibilisator enthalten, da für die Aufzeichnung von blauem Licht in vielen Fällen die Eigenempfindlichkeit des Silberhalogenids ausreicht.

Jede der genannten lichtempfindlichen Schichten kann aus einer einzigen Schicht bestehen oder in bekannter Weise, z.B. bei der sogenannten Doppelschichtanordnung, auch zwei oder auch mehr Silberhalogenidemulsionsteilschichten umfassen (DE-C-1 121 470). Üblicherweise sind rotempfindliche Silberhalogenidemulsionsschichten dem Schichtträger näher angeordnet als grünempfindliche Silberhalogenidemulsionsschichten und diese wiederum näher als blauempfindliche, wobei sich im allgemeinen zwischen grünempfindlichen Schichten und blauempfindlichen Schichten eine nicht lichtempfindliche gelbe Filterschicht befindet. Es sind aber auch andere Anordnungen denkbar. Zwischen Schichten unterschiedlicher Spektralempfindlichkeit ist in der Regel eine nicht lichtempfindliche Zwischenschicht angeordnet, die Mittel zur Unterbindung der Fehldiffusion von Entwickleroxidationsprodukten enthalten kann. Falls mehrere Silberhalogenidemulsionsschichten gleicher Spektralempfindlichkeit vorhanden sind, können diese einander unmittelbar benachbart sein oder so angeordnet sein, daß sich zwischen ihnen eine lichtempfindliche Schicht mit anderer Spektralempfindlichkeit befindet (DE-A-1 958 709, DE-A-2 530 645, DE-A-2 622 922).

Erfindungsgemäße farbfotografische Aufzeichnungsmaterialien enthalten üblicherweise in räumlicher und spektraler Zuordnung zu den Silberhalogenidemulsionsschichten unterschiedlicher Spektralempfindlichkeit Farbkuppler zur Erzeugung der unterschiedlichen Teilfarbenbilder Cyan, Purpur und Gelb, wobei die polymeren Kuppler der vorliegenden Erfindung im allgemeinen einer grünempfindlichen Silberhalogenidemuslionsschicht zugeordnet sind.

Unter räumlicher Zuordnung ist dabei zu verstehen, daß der Farbkuppler sich in einer solchen räumlichen Beziehung zu der Silberhalogenidemulsionsschicht befindet, daß eine Wechselwirkung zwischen ihnen möglich ist, die eine bildgemäße Übereinstimmung zwischen dem bei der Entwicklung gebildeten Silberbild und dem aus dem Farbkuppler erzeugten Farbbild zuläßt. Dies wird in der Regel dadurch erreicht, daß der Farbkuppler in der Silberhalogenidemulsionsschicht selbst enthalten ist oder in einer hierzu benachbarten gegebenenfalls nichtlichtempfindlichen Bindemittelschicht.

Unter spektraler Zuordnung ist zu verstehen, daß die Spektralempfindlichkeit jeder der lichtempfindlichen Silberhalogenidemulsionsschichten und die Farbe des aus dem jeweils räumlich zugeordneten Farbkuppler erzeugten Teilfarbenbildes in einer bestimmten Beziehung zueinander stehen, wobei jeder der Spektralempfindlichkeiten (Rot, Grün, Blau) eine andere Farbe des betreffenden Teilfarbenbildes (im allgemeinen z.B. die Farben Cyan, Purpur bzw. Gelb in dieser Reihenfolge) zugeordnet ist.

Jeder der unterschiedlich spektral sensibilisierten Silberhalogenidemulsionsschichten kann ein oder können auch mehrere Farbkuppler zugeordnet sein. Wenn mehrere Silberhalogenidemulsionsschichten gleicher Spektralempfindlichkeit vorhanden sind, kann jede von ihnen einen Farbkuppler enthalten, wobei diese Farbkuppler nicht notwendigerweise identisch zu sein brauchen. Sie sollen lediglich bei der Farbentwicklung wenigstens annähernd die gleiche Farbe ergeben, normalerweise eine Farbe, die komplementär ist zu der Farbe des Lichtes, für das die betreffenden Silberhalogenidemulsionsschichten überwiegend empfindlich sind.

Rotempfindlichen Silberhalogenidemulsionsschichten ist folglich bei bevorzugten Ausführungsformen mindestens ein nichtdifundierender Farbkuppler zur Erzeugung des blaugrünen Teilfarbenbildes zugeordnet, in der Regel ein Kuppler vom Phenol- oder α-Naphtholtyp. Grünempfindlichen Silberhalogenidemulsionsschichten ist mindestens ein nichtdiffundierender Farbkuppler zur Erzeugung des purpurnen Teilfarbenbildes zugeordnet, wobei gegebenenfalls zusätzlich zu den erfindungsgemäßen polymeren Purpurkupplern auch monomere (niedermolekulare) Purpurkuppler vom Typ des 5-Pyrazolons, des Indazolons oder des Pyrazoloazols Verwendung finden. Blauempfindlichen Silberhalogenidemulsionsschichten schließlich ist mindestens ein nichtdiffundierender Farbkuppler zur Erzeugung des gelben Teilfarbenbildes zugeordnet, in der Regel ein Farbkuppler mit einer offenkettigen Ketomethylengruppierung. Farbkuppler dieser Art sind in großer Zahl bekannt und in einer Vielzahl von Patentschriften beschrieben. Beispielhaft sei hier auf die Veröffentlichungen "Farbkuppler" von W. PELZ in "Mitteilungen aus den Forschungslaboratorien der Agfa, Leverkusen/München", Band III, Seite 111 (1961) und von K. VENKATARAMAN in "The Chemistry of Synthetic Dyes", Vol. 4, 341 bis 387, Academic Press (1971), verwiesen.

Bei den erfindungsgemäßen Farbkupplern wie auch bei den übrigen im farbfotografischen Aufzeichnungsmaterial vorhandenen Farbkupplern kann es sich sowohl um übliche 4-Äquivalentkuppler handeln als auch um 2-Äquivalentkuppler, bei denen zur Farberzeugung eine geringere Menge Silberhalogenid erforderlich ist. 2-Äquivalentkuppler leiten sich bekanntlich von den 4-Äquivalentkupplern dadurch ab, daß sie in der Kupplungsstelle einen Substituenten enthalten, der bei der Kupplung abgespalten wird, Zu den 2-Äquivalentkupplern sind sowohl solche zu rechnen, die praktisch farblos sind, als auch solche, die eine intensive Eigenfarbe aufweisen, die bei der Farbkupplung verschwindet bzw. durch die Farbe des erzeugten Bildfarbstoffes ersetzt wird. Letztere Kuppler können ebenfalls zusätzlich in den lichtempfindlichen Silberhalogenidemulsionsschichten vorhanden sein und dort als Maskenkuppler zur Kompensierung der unerwünschten Nebendichten der Bildfarbstoffe dienen. Zu den 2-Äquivalenkupplern sind aber auch die bekannten Weißkuppler zu rechnen, die jedoch bei Reaktion mit Farbentwickleroxidationsprodukten keinen Farbstoff ergeben. Zu den 2-Äquivalentkupplern sind ferner solche Kuppler zu rechnen, die in der Kupplungsstelle einen abspaltbaren Rest enthalten, der bei Reaktion mit Farbentwickleroxidationsprodukten in Freiheit gesetzt wird und dabei eine bestimmte erwünschte fotografische Wirksamkeit entfaltet, z.B. als Entwicklungsinhibitor oder -accelerator. Beispiele für solche 2-Äquivalentkuppler sind die bekannten DIR-Kuppler wie auch DAR- bzw. FAR-Kuppler. Der abgespaltbare Rest kann auch ein Ballastrest sein, so daß bei der Reaktion mit Farbentwickleroxidationsprodukten Kupplungsprodukte z.B. Farbstoffe erhalten werden können, die diffusionsfähig sind oder zumindest eine schwache bzw. eingeschränkte Beweglichkeit aufweisen,

Unter einer schwachen bzw. eingeschränkten Beweglichkeit ist eine Beweglichkeit zu verstehen, die so bemessen ist, daß die Konturen der bei der chromogenen Entwicklung gebildeten diskreten Farbstoffflecken verlaufen und ineinander verschmiert werden, Dieses Ausmaß der Beweglichkeit ist einerseits zu unterscheiden von dem üblichen Fall der völligen Unbeweglichkeit in fotografischen Schichten, der in der herkömmlichen fotografischen Aufzeichnungsmaterialien für die Farbkuppler bzw. die daraus hergestellten Farbstoffe angestrebt wird um eine möglichst hohe Schärfe zu erzielen, und andererseits von dem Fall der völligen Beweglichkeit der Farbstoffe, der beispielsweise bei Farbdiffusionsverfahren angestrebt wird. Die letztgenannten Farbstoffe verfügen meist über mindestens eine Gruppe, die sie im alkalischen Medium löslich macht. Das Ausmaß der erfindungsgemäß angestrebten schwachen Beweglichkeit kann gesteuert werden durch Variation von Substituenten um beispielsweise die Löslichkeit im organischen Medium des Ölbildners oder die Affinität zur Bindemittelmatrix in gezielter Weise zu beeinflussen.

Für die erfindungsgemäßen Aufzeichnungsmaterialien eignen sich die üblichen Schichtträger, z.B. Träger aus Celluloseestern, z.B. Celluloseacetat und aus Polyestern. Geeignet sind ferner Papierträger, die gegebenenfalls beschichtet sein können z.B. mit Polyolefinen, insbesondere mit Polyethylen oder Polypropylen. Verwiesen wird diesbezüglich auf die oben angegebene Research Disclosure 17643, Kapitel XVII.

Als Schutzkolloid bzw. Bindemittel für die Schichten des Aufzeichnungsmaterials sind die üblichen hydrophilen filmbildenden Mittel geeignet, z.B. Proteine, insbesondere Gelatine. Begußhilfsmittel und Weichmacher können verwendet werden. Verwiesen wird auf die in der oben angegebenen Research Disclosure 17643, Kapitel IX, XI und XII.

Die Schichten des fotografischen Materials können in der üblichen Weise gehärtet sein, beispielsweise mit Härtern, die mindestens zwei reaktive oxiran-, Aziridin- oder Acryloylgruppen enthalten. Weiterhin ist es auch möglich, die Schichten gemäß dem in DE-A-22 18 009 beschriebenen Verfahren zu härten. Es ist ferner möglich, die fotografischen Schichten bzw. die farbfotografischen Mehrschichtenmaterialien mit Härtern der Diazin-Triazin-oder 1,2-Dihydrochinolin-Reihe zu härten oder mit Härtern vom Vinylsulfon-Typ. Weitere geeignete Härtungsmittel sind aus DE-A-24 39 551, DE-A-22 25 230, DE-A-22 17 672 wie auch aus Research Disclosure 17 643, Kapitel X bekannt.

Das fotografische Material kann darüber hinaus weitere Zusätze enthalten, z.B. UV-Licht absorbierende Verbindungen, Weißtöner, Abstandshalter, Filterfarbstoffe, Formalinfänger, Lichtschutzmittel, Antioxidantien, Dₘᵢₙ-Farbstoffe, Zusätze zur Verbesserung der Farbstoff-, Kuppler- und Weißenstabilität sowie zur Verringerung des Farbschleiers, Weichmacher (Latices), Biocide und anderes.

Zusätze zur Verbesserung der Farbstoff-, Kuppler- und Weißenstabilität sowie zur Verringerung des Farbschleiers (Research Disclosure 17 643 (Dez. 1978), Kapitel VII) können den folgenden chemischen Stoffklassen angehören: Hydrochinone, 6-Hydroxychromane, 5-Hydroxycumarane, Spirochromane, Spiroindane, p-Alkoxyphenole, sterische gehinderte Phenole, Gallussäurederivate, Methylendioxybenzole, Aminophenole, sterisch gehinderte Amine, Derivate mit veresterten oder verätherten phenolischen Hydroxylgruppen, Metallkomplexe.

Geeignete Farbentwicklersubstanzen für das erfindungsgemäße Material sind insbesondere solche vom p-Phenylendiamintyp, z.B. 4-Amino-N,N-diethyl-anilinhydrochlorid, 4-Amino-3-methyl-N-ethyl-N-β-(methansulfanamido)-ethylanilinsulfathydrat, 4-Amino-3-methyl-N-ethyl-N-β-hydroxy-ethylanilinsulfat, 4-Amino-N-ethyl-N-(2-methoxyethyl)-m-toluidin-di-p-toluolsulfonsäure und N-Ethyl-N-β-hydroxy-ethyl-p-phenylendiamin. Weitere brauchbare Farbentwickler sind beispielsweise beschrieben in J.Amer.Chem.Soc. 73, 3100 (1951) und in G. Haist, Modern Photographic Processing, 1979, John Wiley and Sons, New York, Seiten 545 ff.

Nach der Farbentwicklung wird das Material üblicherweise gebleicht und fixiert. Bleichung und Fixierung können getrennt voneinander oder auch zusammen durchgeführt werden. Als Bleichmittel können die üblichen Verbindungen verwendet werden, z.B. Fe³⁺-Salze und Fe³⁺-Komplex-salze wie Ferricyanide, Dichromate, wasserlösliche Kobaltkomplexe usw. Besonders bevorzugt sind Eisen-III-Komplexe von Aminopolycarbonsäuren, insbesondere z.B. Ethylendiamintetraessigsäure, Nitrilotriessigsäure, Iminodiessigsäure, N-Hydroxyethylethylendiamintriessigsäure, Alkyliminodicarbonsäuren und von entsprechenden Phosphonsäuren. Geeignet als Bleichmittel sind weiterhin Persulfate.

### Beispiel 1

Die erfindungsgemäßen Polymerkuppler 1, 2, 3, 4, 5, 8, 10 und die polymeren Vergleichskuppler A und B wurden verschiedenen Proben einer Silberhalogenidemulsion zugemischt, die dem eingebrachten Farbkuppler entsprechend für Grün sensibilisiert war. Die verwendete Silberhalogenid-Gelatine-Emulsion bestand aus 75 g Silberbromidiodid (Iodidgehalt 3 mol-%) und 72 g Gelatine bezogen auf 1 kg Emulsion.

Die so präparierten Emulsionen wurden auf mit einer Haftschicht versehene Cellulosetriacetatschichtträger aufgetragen und getrocknet.

### Fotografische Prüfung:

Die einzelnen Proben wurden mittels eines Sensitometers belichtet und danach unter Verwendung des folgenden Farbentwicklers verarbeitet.

| Farbentwickler | |
|---|---|
| Wasser dest. | 800 g |
| Hydroxyethandiphosphonsäure-di-Na-Salz | 2 g |
| Ethylendiamintetraessigsäure-di-Na-Salz | 2 g |
| Kaliumcarbonat | 34 g |
| Natriumhydrogencarbonat | 1,55 g |
| Natriumdisulfit | 0,28 g |
| Natriumsulfit | 3,46 g |
| Kaliumbromid | 1,34 g |
| Hydroxylaminsulfat | 2,4 g |
| N-Ethyl-N-(β-hydroxy)-ethyl-4-amino-3-ethylanilinsulfat | 4,7 g |
| Wasser dest. bis 1000 ml | |

| Verarbeitung | |
|---|---|
| | Verarbeitung [min] (25°C) |
| Farbentwickler | 10 |
| Stoppbad | 4 |
| Zwischenwässerung | 5 |
| Bleichbad | 5 |
| Zwischenwässerung | 5 |
| Fixierbad | 5 |
| Schlußwässerung | 10 |

Bei den Stopp-, Bleich- und Fixierbädern handelt es sich um übliche Badzusammensetzungen. Es wurde ein formalinfreies Schlußbad verwendet.

Bestimmt wurde das Absorptionsmaximum λmax und die Halbbandbreite (HBW) der Absorptionskurve (Tabelle 2).

**Tabelle 2**

| Polymerkuppler | λmax/nm | HBW/nm |
|---|---|---|
| 1 | 550 | 87 |
| 2 | 552 | 85 |
| 3 | 550 | 88 |
| 4 | 551 | 85 |
| 5 | 553 | 84 |
| 8 | 550 | 84 |
| 10 | 553 | 86 |
| A (Vergleich) | 546 | 94 |
| B (Vergleich) | 547 | 95 |

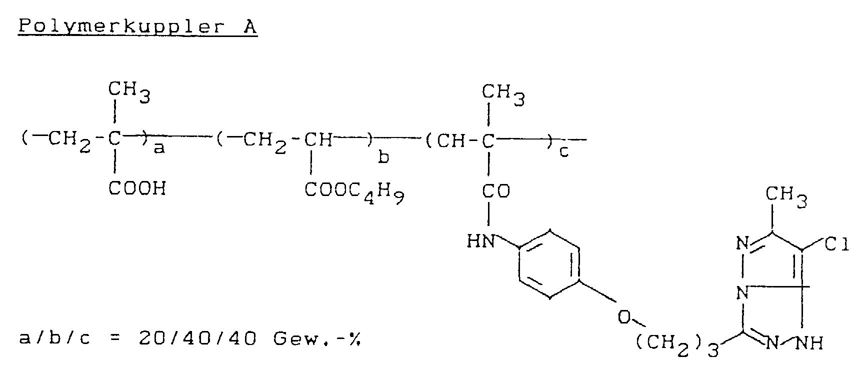

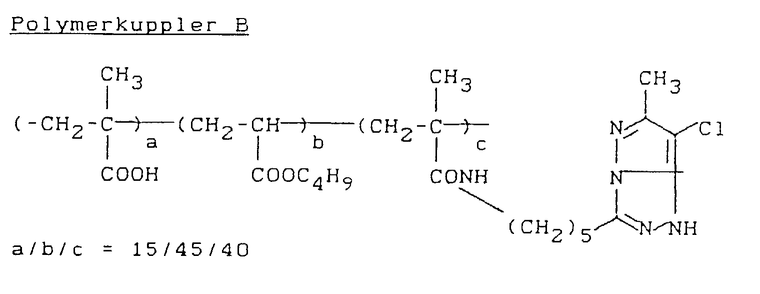

Aus den Ergebnissen ist ersichtlich, daß mit den erfindungsgemäßen Polymeren eine verbesserte Farbwiedergabe im Vergleich zu den bekannten Polymeren Kupplern zu erreichen ist. Die Halbbandbreite der Absorption ist bei den erfindungsgemäßen Polymeren kleiner und das Maximum ist nach längeren Wellenlängen verschoben.

### Beispiel 2

Die erfindungsgemäßen Polymerkuppler 1,2,3,4,5,8,10 und die polymeren Vergleichskuppler A und B werden zusammen mit den hochsiedenden Lösungsmittel S-1, S-2 und S-3 emulgiert. Die Herstellung und Verarbeitung der Proben erfolgt wie in Beispiel 1 beschrieben. Die Halbbandbreite (HBW) der Absorptionskurve und das Absorptionsmaximum wurde gemessen (Tabelle 3).

S-1 Trikresylphosphat

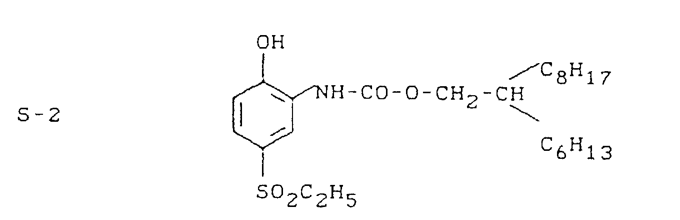

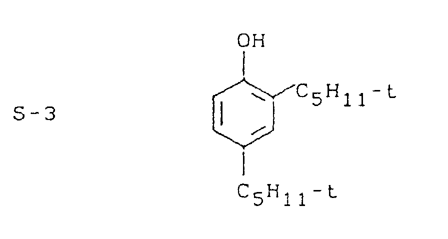

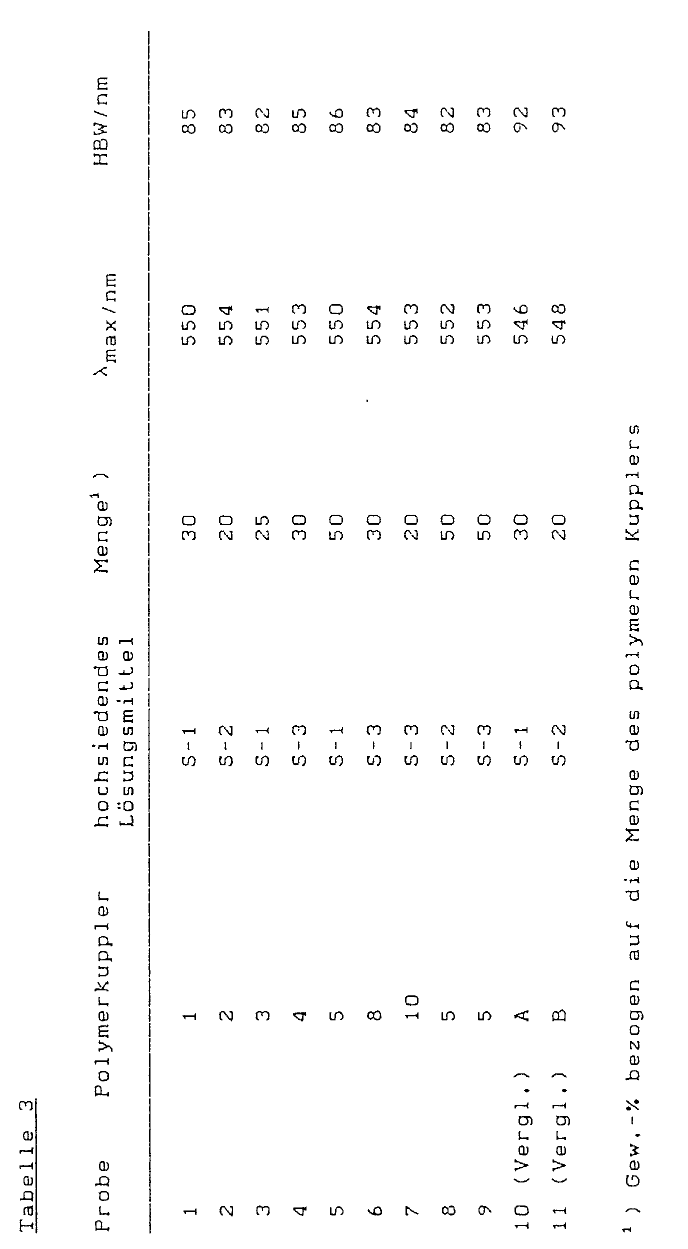

Aus der Tabelle geht hervor, daß die erfindungsgemäßen polymeren Kuppler eine vorteilhafte langwelligere Absorption und schmalbandige Absorptionskurven aufweisen.

## Patentansprüche

1. Polymerer Farbkuppler, erhalten durch Polymerisation von ethylenisch ungesättigten kupplerhaltigen Monomeren, gekennzeichnet durch wiederkehrende Einheiten eines polymerisierten Monomers K der Formel I 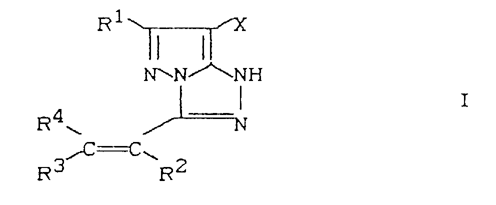 worin bedeuten
R¹ H oder einen gegebenenfalls substituierten Alkylrest;
R², R³, R⁴ (gleich oder verschieden) H, Cl, -COOH oder gebenenfalls substituierte Alkylreste;
X H oder eine durch Kupplung freisetzbare Gruppe.

## Claims

1. A polymeric colour coupler obtainable by the polymerisation of ethylenically unsaturated monomers which contain couplers, characterised by recurring units of a polymerised monomer K of formula I 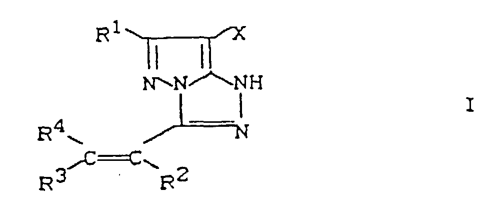 wherein
R¹ denotes H, or an alkyl radical which is optionally substituted;
R², R³, R⁴ (which are the same or different) denote H, Cl, -COOH, or alkyl radicals which are optionally substituted; and
X denotes H or a group which can be released by coupling.

## Revendications

1. Coupleur chromogène polymère obtenu par polymérisation de monomères contenant un coupleur éthyléniquement insaturés, caractérisé par des unités récurrentes d'un monomère polymérisé K de formule I 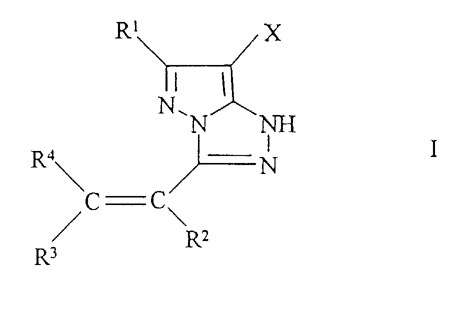 où
R¹ représente H ou un reste alkyle éventuellement substitué ;
R², R³, R⁴ (identiques ou différents) représentent H, Cl, -COOH ou des restes alkyle éventuellement substitués ;
X représente H ou un groupe libérable par couplage.
